# EUROPÄISCHE PATENTANMELDUNG

(11) **EP 2 937 146 A1**
(43) Veröffentlichungstag der Anmeldung: **28.10.2015**
(21) Anmeldenummer: 14165964.9
(22) Anmeldetag: 25.04.2014
(51) Int. Cl.: B05C 5/00, B05C 11/10, B29B 13/02

(54) **Apparatur zum Schmelzen von Klebstoff**

(71) Anmelder: Robatech AG, 5630 Muri (CH)
(72) Erfinder: Hofer, Andreas, CH-5222 Umiken (CH); Hümbeli, Felix, CH-5630 Muri (CH); Käppeli, Christoph, CH-5634 Merenschwand (CH); Rey, Kurt, CH-5623 Boswil (CH)
(74) Vertreter: Quermann, Helmut

(57) **Zusammenfassung**

Die Erfindung betrifft eine Apparatur (1) zum Schmelzen von Klebstoff, insbesondere in Granulatform, mit einem eine Einfüllöffnung (7) aufweisenden Verdichtungsraum (8) zur Aufnahme von festem Klebstoff, einer Einrichtung (9) zum Verdichten des festen Klebstoffs, einer beheizbaren Schmelzeinrichtung (12) zum Schmelzen des Klebstoffs sowie einem beheizbaren Behälter (17) zur Aufnahme des geschmolzenen Klebstoffs, wobei der in den Verdichtungsraum (8) eingefüllte feste Klebstoff mittels der Einrichtung (9) durch Öffnungen (16) in der Schmelzeinrichtung (12) gepresst und in dieser geschmolzen wird, sowie der geschmolzene Klebstoff aus der Schmelzeinrichtung (12) ausgegeben und in den Behälter (17) abgeführt wird.

Bei einer solchen Apparatur ist erfindungsgemäß vorgesehen, dass der Verdichtungsraum (8) oben die Einfüllöffnung (7) aufweist, die Kraftrichtung der Einrichtung (9) beim Verdichten horizontal ist und die Schmelzeinrichtung (12) außerhalb des Bereiches der Verdichtungsraums (8), der sich unterhalb der Einfüllöffnung (7) befindet, angeordnet ist.

Bei einer solchen Apparatur wird insbesondere eine Aufheizung des in dem Verdichtungsraum im Bereich dessen Einfüllöffnung befindlichen Klebstoffs in Granulatform vermieden.

## Beschreibung

Die Erfindung betrifft eine Apparatur zum Schmelzen von Klebstoff, insbesondere in Granulatform, mit einem eine Einfüllöffnung aufweisenden Verdichtungsraum zur Aufnahme von festem Klebstoff, einer Einrichtung zum Verdichten des festen Klebstoffs, einer beheizbaren Schmelzeinrichtung zum Schmelzen des Klebstoffs sowie einem beheizbaren Behälter zur Aufnahme des geschmolzenen Klebstoffs, wobei der in den Verdichtungsraum eingeführte feste Klebstoff mittels der Einrichtung durch Öffnungen in der Schmelzeinrichtung gepresst und in dieser geschmolzen wird, sowie der geschmolzene Klebstoff aus der Schmelzeinrichtung ausgegeben und in den Behälter abgeführt wird.

Bekannte Apparaturen zum Schmelzen von Klebstoff in Granulatform besitzen meist ein großes Reservoir, typischerweise ein Volumen von 5 bis 30 Liter. In diesem Reservoir wird der Klebstoff über längere Zeit geschmolzen und wird somit thermisch belastet. In solchen Apparaturen wird ein wärmeempfindlicher Klebstoff innerhalb kürzester Zeit geschädigt. Der Klebstoff bildet Ablagerungen in der Apparatur mit möglichen Verschleppungseffekten von Partikeln bis hin zu Störungen.

Bislang bekannte Apparaturen zum Schmelzen von Klebstoffen, die nach dem Melt-On-Demand-Prinzip arbeiten, werden zwar meistens mit Klebstoffkerzen (z. B. PUR Hotmelts) betrieben, können aber auch zum Aufschmelzen von Granulat verwendet werden. Bei diesen Systemen ist die beheizbare Schmelzeinrichtung meistens vertikal unterhalb der Klebstoffzuführung angeordnet. Als Folge davon schmilzt beim Unterbrechen des Schmelzvorgangs der Klebstoff im Reservoir so lange nach, bis sich die heiße Schmelzeinrichtung, die beispielsweise als Grill ausgebildet ist, abgekühlt hat. Im ungünstigsten Fall schmilzt der Klebstoff vollständig auf, wodurch Klebstoffdämpfe austreten können und das Gerät verunreinigen.

Melt-On-Demand-Apparaturen arbeiten dazu teilweise mit Kühlungen, die teuer und wartungsintensiv sind. Ebenso werden Vorrichtungen eingesetzt, die eine Klebstoffkerze festhalten, um so ein Nachschmelzen zu verhindern. Diese Verfahrensweise ist bei Verwendung von Granulaten nicht anwendbar.

Eine Apparatur der eingangs genannten Art ist aus der US 2013/0112709 A1 bekannt. Bei dieser ist oberhalb der beheizbaren Schmelzeinrichtung, die als horizontal angeordnete Platte mit diese durchsetzenden Löchern ausgebildet ist, der Verdichtungsraum zur Aufnahme des festen Klebstoffs gebildet. Nach oben ist dieser Verdichtungsraum durch einen plattenförmigen Stempel begrenzt, der zusätzlich mit Heizelementen zu dessen Aufheizen ausgestattet sein kann. Dieser Stempel ist mittels einer Kolbenstange verfahrbar. In den Verdichtungsraum mündet seitlich eine Leitung, durch die der in Granulatform vorliegende feste Klebestoff in den Verdichtungsraum ausgegeben werden kann. Die plattenförmige Schmelzeinrichtung liegt auf einer darunter befindlichen Platte auf, die einen Ausgabekanal für den geschmolzenen Klebstoff aufweist. Auch die untere Platte und die plattenförmige Schmelzeinrichtung sind beheizbar. Die Heiztemperatur des Stempels und der Platte beträgt zwischen 93 °C und 232 °C. Der geschmolzene Klebstoff wird aus der Schmelzeinrichtung ausgegeben und über den Ausgabekanal in der unteren Platte zu dem unterhalb dieser angeordneten Behälter abgeführt. In diesem wird der flüssige Klebstoff bei hoher Temperatur aufgenommen und mittels einer Pumpe zu einer Ausgabeeinheit zum Ausgeben des flüssigen Klebstoffs gefördert.

Bei dieser Apparatur ist nachteilig, dass die dem Schmelzen des Klebstoffs dienenden Teile übereinander angeordnet sind, sodass die Teile sich gegenseitige aufheizen und insbesondere Wärme vom jeweils unten liegenden Teil zum darüber befindlichen Teil aufsteigt und zu einer erhöhten Aufheizung dieses Teils und damit des Klebstoffs führt.

Um die Verweilzeit des flüssigen Klebstoffs in einer Apparatur zum Schmelzen von Klebstoff zu reduzieren und überdies eine thermische Interaktion von Teilen der Apparatur, die den noch nicht geschmolzenen Klebstoff aufnehmen, mit Teilen, die den geschmolzenen Klebstoff aufnehmen, zu minimieren, ist bereits vorgeschlagen worden, diese Teile weitgehend thermisch zu isolieren. So ist in der US 2014/0042182 A1 eine Apparatur zum Aufschmelzen von Klebstoff in Granulatform beschrieben, bei der oberhalb einer beheizbaren Schmelzeinrichtung zum Schmelzen des Klebstoffs ein Vorratsbehälter für Klebstoff in Granulatform angeordnet ist, der eine Förderschnecke für den Klebstoff in Granulatform aufnimmt. Mittels dieser Förderschnecke wird der feste Klebstoff bezüglich der beheizten Schmelzeinrichtung verdichtet und durch Löcher in der Schmelzeinrichtung gepresst, wobei sich das Granulat aufgrund der Einwirkung der Wärme der Schmelzeinrichtung verflüssigt. In dem Verdichtungsraum des Vorratsbehälters ist ein Sensor angeordnet, sodass bei Unterschreiten eines Füllstandes von Klebstoff in Granulatform der Vorratsbehälter nachbefüllt wird. Je nach Ausgabe des flüssigen Klebstoffs mittels eines Ausgabegeräts wird Klebstoff in Granulatform nachgefördert, um diesen, somit On-Demand zu schmelzen.

Bei dieser Apparatur ist somit der Vorratsbehälter unabhängig von der beheizbaren Schmelzeinrichtung angeordnet, allerdings direkt oberhalb der beheizbaren Schmelzeinrichtung mit der negativen nachteiligen Folge der Erhitzung des Klebstoffs in Granulatform innerhalb des Vorratsbehälters.

Apparaturen zum Schmelzen von Klebstoff in Granulatform sind ferner aus der US 2013/0112710 A1, US 2013/0105516 A1 und EP 1 147 143 A1 bekannt.

Aufgabe der vorliegenden Erfindung ist es, eine Apparatur der eingangs genannten Art so weiterzubilden, dass eine Aufheizung des in dem Verdichtungsraum im Bereich dessen Einfüllöffnung befindlichen Klebstoffs in Granulatform vermieden wird.

Gelöst wird die Aufgabe dadurch, dass der Verdichtungsraum oben die Einfüllöffnung aufweist, die Kraftrichtung der Einrichtung zum Verdichten des festen Klebestoffs beim Verdichten horizontal ist und die Schmelzeinrichtung außerhalb des Bereichs des Verdichtungsraums, der sich unterhalb der Einfüllöffnung befindet, angeordnet ist.

Aufgrund der Positionierung der Schmelzeinrichtung ist einerseits sichergestellt, dass diese in ausreichendem Abstand zur Einfüllöffnung des Verdichtungsraums angeordnet ist, und andererseits bezüglich einer durch die Einfüllöffnung gehenden Vertikalen seitlich versetzt zu dieser angeordnet ist, mit der Folge, dass von der Schmelzeinrichtung ausgehende Wärme nur sehr untergeordnet in den Bereich des Verdichtungsraums, benachbart der Einfüllöffnung abstrahlt. Hierdurch kann die Temperatur im Bereich der Einfüllöffnung gering gehalten werden. Insbesondere wird es als vorteilhaft angesehen, wenn diese Temperatur im Bereich der Einfüllöffnung 40 °C nicht übersteigt. Hierdurch ist sichergestellt, dass das Granulat rieselfähig bleibt, somit nicht infolge erhöhter Temperatur verklebt. Dies würde die Zuführung des Klebstoffs zur Schmelzeinrichtung nachteilig beeinflussen und damit die Prozesssicherheit des Schmelzvorgangs und demzufolge die Zuführung des geschmolzenen Klebstoffs zur Weiterverarbeitungsstation, insbesondere einer Spritzdüse für den flüssigen Klebstoff beeinträchtigen.

Unter dem Aspekt der Weiterbildung der erfindungsgemäßen Apparatur kommt der Ausbildung und Anordnung der Schmelzeinheit eine besondere Bedeutung zu. So ist die Schmelzeinheit insbesondere als Grill mit einer Vielzahl von Öffnungen ausgebildet. Vorteilhaft weist jede Öffnung der Schmelzeinheit einen sich in Durchpressrichtung des Klebstoffs durch die Öffnung verjüngenden Querschnitt auf. Hierdurch ergibt sich eine große thermisch wirksame Oberfläche der Schmelzeinrichtung bzw. des Grills.

Die Schmelzeinrichtung hat vorzugsweise eine sehr kleine Volumenmasse, die dafür sorgt, dass sich die Schmelzeinrichtung schnell aufheizen kann. Dank der kleinen Volumenmasse kann die Schmelzeinrichtung nicht viel Wärme speichern und kühlt auch dementsprechend schnell ab. Während des Abkühlens schmilzt zudem eine kleine Menge Klebstoff nach. Die dafür benötigte Schmelzenergie verkürzt die Abkühlzeit zusätzlich.

Die Einrichtung zum Verdichten des festen Klebstoffs ermöglicht es, trotz der kleinen Schmelzeinrichtung bzw. des kleinen Grills und der kleinen Volumenmasse, insbesondere aufgrund des Materials Aluminium, die geforderten Schmelzleistungen zu erreichen. So wird der Klebstoff mit Hilfe der Einrichtung zum Verdichten des festen Klebstoffs durch die heiße Schmelzeinrichtung bzw. den heißen Grill gepresst. Insbesondere ist im Verdichtungsraum ein Kolben der Einrichtung zum Verdichten des festen Klebestoffs verschieblich. Der Kolben verschließt vorteilhaft beim Ausfahren die Einfüllöffnung. Ist die Einfüllöffnung mittels des Kolbens verschlossen, kann einerseits kein Klebstoff in Granulatform in den Verdichtungsraum nachrieseln und andererseits isoliert der Kolben zusätzlich den die Einfüllöffnung aufweisenden kühlen Bereich des Verdichtungsraums zur heißen Schmelzeinrichtung bzw. dem heißen Grill. Der Kolben besteht vorzugsweise aus wärmeisolierendem Material.

Es wird als besonders vorteilhaft angesehen, wenn die Schmelzeinrichtung vertikal oder unter einem spitzen Winkel, vorzugsweise unter einem Winkel von 30° bis 60°, insbesondere unter einem Winkel von 45° zur Vertikalen angeordnet ist. Diese Anordnung der Schmelzeinrichtung bzw. des Grills berücksichtigt, dass der Klebstoff nicht nur in der Schmelzeinrichtung bzw. dem Grill schmilzt, sondern auch in einem bestimmten Bereich auf der Oberfläche der Schmelzeinrichtung bzw. vor der Schmelzeinrichtung. Durch die beschriebene Orientierung der Schmelzeinrichtung, insbesondere geneigte Anordnung der Schmelzeinrichtung, und deren erfindungsgemäße Anordnung außerhalb des Bereich des Verdichtungsraums, der sich unterhalb der Einfüllöffnung befindet, wird verhindert, dass der aufgeschmolzene Klebstoff in Richtung des kalten, ungeschmolzenen Klebstoffs fließt, insbesondere in den Bereich der Einfüllöffnung des Verdichtungsraums.

Die Öffnungen der Schmelzeinrichtung, durch die der geschmolzene Klebstoff durchtritt, sind insbesondere senkrecht zur grundsätzlichen Orientierung der Schmelzeinrichtung angeordnet. Es wird somit als vorteilhaft angesehen, wenn die die Schmelzeinrichtung durchsetzenden Öffnungen jeweils horizontal oder unter einem spitzen Winkel, vorzugsweise unter einem Winkel von 30° bis 60°, insbesondere unter einem Winkel von 45° zur Horizontalen angeordnet sind.

Unter dem Aspekt der Anordnung der Schmelzeinrichtung unter einem Winkel von 30° bis 60° zur Vertikalen wird es als besonders vorteilhaft angesehen, wenn eine dem Verdichtungsraum zugewandte Kolbenfläche des Kolbens der Einrichtung zum Verdichten des festen Klebstoffs unter einem Winkel von 10° bis 40°, insbesondere 20° bis 30° zur Vertikalen angeordnet ist, wobei ein oberes Ende der Kolbenfläche in Ausfahrrichtung des Kolbens vorlaufend angeordnet ist. Es ergibt sich somit ein im Querschnitt schiefwinkliger Verdichtungsraum, bei dem die Kolbenfläche und die Schmelzeinheit ähnlich orientiert, allerdings zur Vertikalen geneigt angeordnet sind.

Die Form der Kolbenfläche und/oder die Form der Schmelzeinrichtung ist insbesondere rund, oval oder eckig.

Gemäß einer bevorzugten Weiterbildung der Erfindung ist vorgesehen, dass die Schmelzeinrichtung, bezogen auf deren Vertikalerstreckung, symmetrisch zu einer Vorschubachse des Kolbens oder asymmetrisch nach unten versetzt zu der Vorschubachse des Kolbens angeordnet ist. Die Schmelzeinrichtung kann demnach in großem Abstand zur Einfüllöffnung des Verdichtungsraums, und bei asymmetrisch nach unten versetzter Anordnung zudem noch in einem größeren vertikalen Abstand zur Einfüllöffnung des Verdichtungsraums angeordnet werden. Dies gewährleistet eine noch bessere thermische Entkopplung von Schmelzeinrichtung und Einfüllöffnung. Als besonders vorteilhaft wird angesehen, wenn die Schmelzeinrichtung bzw. der Grill einerseits um 45°zur Vertikalen gedreht ist und zusätzlich vertikal unterhalb die Achse des Kolbens geschoben ist. Hierdurch entsteht ein Volumen, das den geschmolzenen Klebstoff, der sich vor der Schmelzeinrichtung befindet, auffangen und durch die Löcher in der Schmelzeinrichtung abführen kann. Dadurch ist gewährleistet, dass sich dieser flüssige Klebstoff nicht mit dem ungeschmolzenen Klebstoff im Verdichtungsbereich vermischt.

Vorzugsweise ist die Apparatur derart weitergebildet, dass oberhalb des Verdichtungsraums ein Vorratsbehälter, insbesondere ein einen Ausgabetrichter aufweisender Vorratsbehälter angeordnet ist. Dieser Vorratsbehälter weist eine Ausgabeöffnung zum unmittelbaren Ausgeben von Klebstoff in Granulatform durch die Einfüllöffnung in den Verdichtungsraum auf. Bei der Ausgabeöffnung und der Einfüllöffnung handelt es sich somit vorzugsweise um eine gemeinsame Öffnung, durch die Klebstoff in Granulatform vom Vorratsbehälter in den Verdichtungsraum gelangt. Der Verdichtungsraum, insbesondere der Ausgabetrichter, ist somit nicht direkt oberhalb der Schmelzeinrichtung bzw. des Grills angeordnet, sondern seitlich versetzt hierzu angeordnet. Unterstützt durch geeignete Materialwahl im Sinne einer hohen Isolierwirkung, zum Beispiel durch Wahl des Materials PFTE, POM oder geringer Mengen Aluminium, überträgt die Schmelzeinrichtung demnach auch wenig Wärme auf den im Materialfluss stromaufwärtigen Vorratsbehälter bzw. Ausgabetrichter. Aufgrund dieser thermischen Trennung von Schmelzeinrichtung und Vorratsbehälter verbleibt das ungeschmolzene Granulat kalt und rieselfähig.

Vorzugsweise ist die Schmelzeinrichtung bzw. der Grill auch vom beheizbaren Behälter zur Aufnahme des geschmolzenen Klebstoffs thermisch getrennt.

Als besonders vorteilhaft wird es angesehen, wenn der beheizbare Behälter räumlich neben der Schmelzeinrichtung angeordnet ist. Dieser beheizbare Behälter, der insbesondere ein kleines Reservoir bildet, in Art eines Pumpenblocks, und der permanent heiß ist, überträgt so fast keine Wärme auf die Schmelzeinrichtung bzw. den Grill. Wird die Schmelzeinrichtung nicht beheizt und ist somit abgekühlt, erfolgt keine zusätzliche Erwärmung der Schmelzeinrichtung mittels des beheizten Behälters bzw. des im beheizten Behälter befindlichen heißen Klebstoffs.

Vorzugsweise weist die Schmelzeinrichtung eine Leitung zum Abführen des geschmolzenen Klebstoffs auf, wobei unterhalb der Leitung der beheizbare Behälter angeordnet ist, in dem der Klebstoff aufgefangen wird. Dem Behälter ist eine Pumpe zum Ausgeben des heißen Klebstoffs zwecks dessen Auftrags zugeordnet.

Insbesondere wird, nach dem Verlassen der Schmelzeinrichtung, der Klebstoff im beheizbaren Behälter bzw. im Pumpenblock durch einen labyrinthförmigen Kanal zur Ansaugöffnung der Pumpe zwangsgeführt. Dadurch bleibt dem Klebstoff genügend Zeit, sich auf die geforderte Temperatur zu erwärmen. Es kommt somit im Verhältnis wenig Klebstoff mit viel Oberfläche des Behälters in Berührung.

Ein Niveausensor im Behälter bzw. im Pumpenblock regelt vorzugsweise die Temperatur der Schmelzeinrichtung bzw. des Grills derart, dass die Menge geschmolzenen Klebstoffs im Behälter bzw. im Pumpenblock konstant bleibt. Dadurch wird der Klebstoff abhängig vom Verbrauch geschmolzen - Melt-On-Demand -. Dank des geringen Klebstoffvolumens im Behälter bzw. im Pumpenblock, das über längere Zeit auf einer hohen Temperatur gehalten werden muss, verbraucht die Apparatur relativ wenig Energie zur Verarbeitung einer definierten Menge Klebstoff.

Die Apparatur zum Schmelzen von Klebstoff in Granulatform einschließlich deren Weiterbildungen vermeidet somit die Auswirkungen einer zeitlich längeren thermischen Belastung des Klebstoffs. Somit werden thermische Überbeanspruchungen des Klebstoffs vermieden, nämlich u. a. Verkohlen und Viskositätsänderung und deren negative Auswirkungen in nachfolgenden Prozessen, zum Beispiel Partikelbildungen. Klebstoff wird vielmehr erst bei Bedarf geschmolzen und möglichst kurzzeitig in möglichst kleiner Menge in aufgeschmolzenem Zustand gehalten. Die Apparatur weist infolgedessen ein möglichst kleines Reservoir mit geschmolzenem Klebstoff auf. Um trotzdem die wechselnde Anforderung an geschmolzenem Klebstoff schnell erfüllen zu können, kann die Schmelzeinheit schnell aufgeheizt und der flüssige Klebstoff schnell bereitgestellt und verarbeitet werden. Hierbei ist ein schnelles Abkühlen der Schmelzeinheit möglich. Hierdurch wird vermieden, dass das relativ kleine Reservoir nicht mit nachschmelzendem Klebstoff überfüllt wird. Zudem wird sichergestellt, dass die Temperatur an der Einfüllöffnung bzw. dem Vorratsbehälter/Trichter, somit im Einfüllbereich des Verdichtungsraums eine Grenztemperatur nicht übersteigt, beispielsweise 40 °C, da sonst die Gefahr besteht, dass das Granulat verklebt und nicht mehr rieselfähig ist. Infolge des kleinen Reservoirs bleibt dem Klebstoff nur kurze Zeit, um komplett aufzuschmelzen. Dennoch gewährleistet die Apparatur, dass der Klebstoff bis zum Austritt aus der Apparatur die gewünschte Weiterverarbeitungstemperatur erreicht.

Von besonderer Bedeutung ist, dass die Apparatur drei voneinander unabhängige Temperaturzonen aufweist, nämlich den kalten Bereich von Einfüllöffnung in den Verdichtungsraum bzw. kalten Bereich von Vorratsbehälter/Trichter, des Weiteren die Schmelzeinrichtung, die schnell erhitzt werden kann und schnell abkühlt, ferner den heißen Behälter bzw. Reservoir. Hierbei ist die Schmelzeinrichtung bzw. der Grill thermisch von den sonstigen Komponenten der Apparatur getrennt.

Weitere Merkmale der Erfindung sind in den Unteransprüchen, der Beschreibung der Zeichnung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand bevorzugter Ausführungsbeispiele dargestellt, ohne hierauf beschränkt zu sein. Es zeigt:
- Figur 1: ein erstes Ausführungsbeispiel der erfindungsgemäßen Apparatur, veranschaulicht in schematischer Darstellung, von der Seite,
- Figur 2: die Apparatur gemäß Fig. 1, veranschaulicht in schematischer Darstellung, von oben,
- Figur 3: ein zweites Ausführungsbeispiel der erfindungsgemäßen Apparatur, veranschaulicht in schematischer Darstellung, von der Seite, allerdings nur für den Bereich von Vorratsbehälter, Einrichtung zum Verdichten des festen Klebstoffs und beheizbarer Schmelzeinrichtung gezeigt,
- Figur 4: eine Darstellung gemäß Fig. 3 für ein drittes Ausführungsbeispiel,
- Figur 5: eine Darstellung gemäß der Fig. 3 und 4 für ein viertes Ausführungsbeispiel.

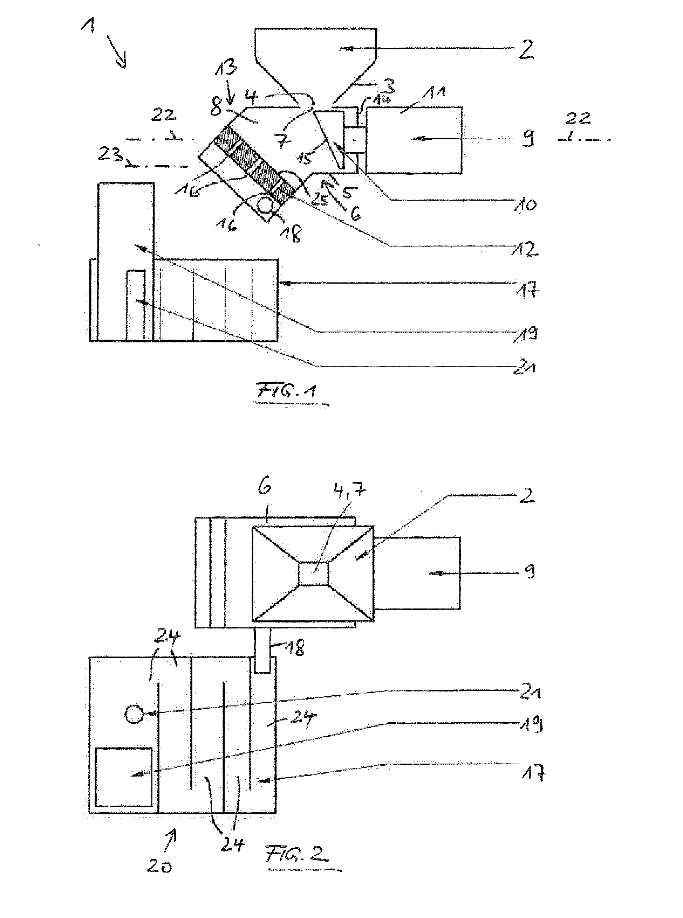

Die Fig. 1 und 2 zeigen für das erste Ausführungsbeispiel eine Apparatur 1 zum Schmelzen von Klebstoff in Granulatform.

Die Apparatur 1 weist einen Vorratsbehälter 2 mit unterem Ausgabetrichter 3 zur Aufnahme von Klebstoff in Granulatform, somit von festem Klebstoff auf. Im Bereich des unteren Endes ist der Ausgabetrichter 3 mit einer Ausgabeöffnung 4 versehen. Der Vorratsbehälter 2, insbesondere der Ausgabetrichter 3 besteht aus Kunststoff, insbesondere aus PTFE oder POM. Damit weist insbesondere der Ausgabetrichter 3 eine geringe Wärmeleitfähigkeit auf. Der Vorratsbehälter 2 kann auch aus einem anderen Material bestehen, beispielsweise aus Metall.

Der Ausgabetrichter 3 grenzt im Bereich seiner Ausgabeöffnung 4 unmittelbar an ein Gehäuse 5 eines Zylinders 6 an. Dem Ausgabetrichter 3 bzw. der Ausgabeöffnung 4 zugewandt ist das Gehäuse 5 mit einer Einfüllöffnung 7 versehen. Im Inneren des Gehäuses 5 ist ein Verdichtungsraum 8 gebildet. Von der Ausgabeöffnung 4 wird Klebstoff in Granulatform unmittelbar durch die Einfüllöffnung 7 in den Verdichtungsraum 8 ausgegeben.

Die Apparatur 1 weist ferner eine Einrichtung 9 zum Verdichten des festen Klebestoffs auf. Hierbei ist im Verdichtungsraum 8 ein Kolben 10 der Einrichtung 9 verschieblich. Die Verschiebung des Kolbens 10 erfolgt mittels eines pneumatisch, elektrisch oder hydraulisch betriebenen Zylinders 11 der Einrichtung 9. Auch der Kolben 10 besteht vorzugsweise aus einem Material geringer Wärmeleitfähigkeit.

Der Kolben 10 dient dem Verdichten des in den Verdichtungsraum 8 eingefüllten festen Klebstoffs in Richtung einer beheizbaren Schmelzeinrichtung 12, die in einem Gehäusestutzen 13 gelagert ist, wobei der Gehäusestutzen 13 unter einem stumpfen Winkel zum Gehäuse 5 angeordnet ist und mit diesem verbunden ist. In der vollständig eingefahrenen Position des Kolbens 10, der an einer Stirnwandung 14 des Gehäuses 5 anliegt, gibt der Kolben 10 die Einfüllöffnung 7 des Gehäuses 5 frei. Wird der Kolben 10 in Richtung der Schmelzeinrichtung 12 ausgefahren, verschließt er mit zunehmender Ausfahrbewegung zunehmend die Einfüllöffnung 7, sodass beim Verdichten kein Granulat aus dem Gehäuse 5 in den Ausgabetrichter 3 zurückgedrängt wird.

Die dem Verdichtungsraum 8 zugewandte, die Pressung des Klebstoffs herbeiführende Kolbenfläche 15 ist unter einem Winkel von vorzugsweise 10° bis 40°, insbesondere 20°bis 30°, im konkreten Ausführungsbeispiel unter einem Winkel von 25° zur Vertikalen angeordnet, wobei das obere Ende der Kolbenfläche 15 weiter entfernt bezüglich des Zylinders 11 ist als das untere Ende der Kolbenfläche 15. Der Querschnitt des Kolbens 10 bzw. des Verdichtungsraums 8 ist insbesondere rund, oval oder eckig, beispielsweise rechteckig, sechseckig usw.

Der in den Verdichtungsraum 8 eingefüllte feste Klebstoff wird mittels der Einrichtung 9, konkret durch Verfahren des Kolbens 10, durch Öffnungen 16 in der Schmelzeinrichtung 12 gepresst. Hierbei ist die Schmelzeinrichtung 12 über deren gesamte dem Verdichtungsraum 8 zugewandte Fläche mit den in Abstand zueinander angeordneten Öffnungen 16 versehen. In der Darstellung gemäß Fig. 1 sind nur drei Öffnungen 16 veranschaulicht. Mittels der beim Verdichtungsvorgang des festen Klebstoffs beheizte Schmelzeinrichtung 12 wird der Klebstoff geschmolzen und tritt durch die Öffnungen 16 hindurch. Der geschmolzene Klebstoff wird aus der Schmelzeinrichtung 12 ausgegeben und in einen beheizten Behälter 17 ausgegeben.

Stromabwärts der Schmelzeinrichtung 12 nimmt der stirnseitig geschlossene Gehäusestutzen 13 eine Schmelzleitung 18, die als Rohr ausgebildet ist, auf. Durch diese Schmelzleitung 18 wird der geschmolzene Klebstoff zu dem unterhalb der Schmelzleitung 18 angeordneten Behälter 17 abgeführt. Dieser Behälter 17 ist permanent heiß, sodass der in dem Behälter 17 aufgefangene Klebstoff flüssig einer Ansaugöffnung einer Pumpe 19 zugeführt werden kann. Der Behälter 17 und die Pumpe 19 bilden eine Pumpeneinheit 20. Ein Niveausensor 21 in der Pumpeneinheit 20 regelt die Temperatur der Schmelzeinrichtung 12 derart, dass die Menge geschmolzenen Klebstoffs in der Pumpeneinheit 20 bzw. im Behälter 17 konstant bleibt.

Bei der Apparatur 1 weist, bezogen auf die vertikale Orientierung der Apparatur 1, der Verdichtungsraum 8 somit oben die Einfüllöffnung 7 auf und es ist die Kraftrichtung der Einrichtung 9, somit die Verfahrrichtung des Kolbens 10 der Einrichtung 9 beim Verdichten horizontal. Ferner ist die Schmelzeinrichtung 12 außerhalb des Bereiches des Verdichtungsraums 8, der sich unterhalb der Einfüllöffnung 7 befindet, angeordnet.

Die Schmelzeinrichtung 12 ist als Grill mit der Vielzahl von Öffnungen 16 ausgebildet. Im Wesentlichen ist die Schmelzeinrichtung 12 plattenförmig gestaltet, wobei die Schmelzeinrichtung 12, insbesondere der an dem Kolben 10 zugewandten Fläche 25, unter einem spitzen Winkel von 30°bis 60°, im Ausführungsbeispiel unter einem Winkel von etwa 45° zur Vertikalen angeordnet ist. Entgegen der vereinfachten Darstellung in Fig. 1 ist die Schmelzeinrichtung 12, insbesondere der Grill, derart gestaltet, dass jede Öffnung 16 einen sich in Durchpressrichtung des Klebstoffs durch die Öffnung 16 verjüngenden Querschnitt aufweist. Die die Schmelzeinrichtung 12 durchsetzenden Öffnungen 16 sind unter einem Winkel von 30° bis 60°, im Ausführungsbeispiel unter einem Winkel von ungefähr 45° zur Horizontalen angeordnet.

Die Schmelzeinrichtung 12 ist, bezogen auf deren Erstreckung in Vertikalrichtung, asymmetrisch nach unten versetzt zu der Vorschubachse 22 des Kolbens 10 angeordnet. Diese Asymmetrie ist durch den vertikalen Abstand von Vorschubachse 22 und Mittelpunktlinie 23 der Schmelzeinrichtung 12 verdeutlicht. Die Schmelzeinrichtung 12 bzw. der Grill hat eine sehr kleine Volumenmasse und besteht aus Aluminium. Demzufolge kann die Schmelzeinrichtung 12 schnell aufgeheizt werden. Dank der kleinen Volumenmasse kann die Schmelzeinrichtung 12 nicht viel Wärme speichern und kühlt auch dementsprechend schnell ab.

Die Apparatur 1 besitzt drei voneinander unabhängige Temperaturzonen, nämlich den kalten Vorratsbehälter 2 mit Ausgabetrichter 3, die Schmelzeinrichtung 12, die sich schnell erhitzen lässt und die schnell abkühlt, ferner den Pumpenblock 20 mit Behälter 17, der ein heißes Reservoir geschmolzenen Klebstoffs darstellt. Demzufolge ist die Schmelzeinrichtung 12 thermisch vom Rest der Apparatur 1 getrennt. Das nachgeschaltete kleine Reservoir, die Pumpeneinheit 20, die permanent heißt ist, ist thermisch isoliert und räumlich getrennt neben der Schmelzeinrichtung 12 angeordnet und überträgt so fast keine Wärme auf die Schmelzeinrichtung 12. Auch der Vorratsbehälter 2, insbesondere der Ausgabetrichter 3 ist nicht direkt oberhalb der Schmelzeinrichtung 12, sondern seitlich versetzt angeordnet. Unterstützt durch die Materialwahl, insbesondere PTFE, POM, geringer Anteil an Aluminium, überträgt die Schmelzeinrichtung 12 so auch wenig Wärme auf den vorgeschalteten Ausgabetrichter 3. Dadurch bleibt das ungeschmolzene Granulat kalt und bleibt rieselfähig. Wegen der sehr kleinen Volumenmasse der Schmelzeinrichtung 12 lässt sich diese schnell aufheizen und kühlt auch dementsprechend schnell ab. Während des Abkühlens schmilzt zudem eine kleine Menge Klebstoff nach. Die dafür benötigte Schmelzenergie verkürzt die Abkühlzeit zusätzlich. Um trotz der volumenmäßig kleinen Schmelzeinrichtung 12 und deren kleine Volumenmasse die geforderten Schmelzleistungen zu erreichen, wird der Klebstoff mit Hilfe der Einrichtung 9, konkret des Kolbens 10, durch die heiße Schmelzeinrichtung 12 bzw. den heißen Grill gepresst. Der Klebstoff schmilzt aber nicht nur in der Schmelzeinrichtung 12 bzw. im Grill, sondern auch in einem bestimmten Bereich auf der Oberfläche von Schmelzeinrichtung 12 bzw. Grill, bzw. vor der Schmelzeinrichtung 12. Dieser aufgeschmolzene Klebstoff darf nicht in Richtung des kalten, ungeschmolzenen Klebstoffs fließen. Um dies zu verhindern, ist die Schmelzeinrichtung 12 bzw. der Grill einerseits um die 45°zur Vertikalen gedreht und zusätzlich vertikal unterhalb der Vorschubachse 22 des Kolbens 10 angeordnet. Dadurch entsteht ein Volumen, das geschmolzenen Klebstoff vor der Schmelzeinrichtung 12 bzw. vor dem Grill auffangen und durch die Öffnungen 16 abführen kann. Dadurch ist gewährleistet, dass sich diese flüssige Klebstoff nicht mit dem ungeschmolzenen Klebstoff im Verdichtungsbereich vermischen kann.

Nach dem Verlassen der Schmelzeinrichtung 12 wird der Klebstoff in der Pumpeneinheit 20 durch einen labyrinthförmigen Kanal zur Ansaugöffnung der Pumpe 19 zwangsgeführt. Da im Verhältnis wenig Klebstoff mit einer großen Oberfläche des Behälters 17 in Berührung kommt, bleibt dem Klebstoff genügend Zeit, sich auf die geforderte Temperatur zu erwärmen. Der Niveausensor 21 in der Pumpeneinheit 20 regelt die Grilltemperatur, dahingehend, dass die Menge geschmolzenen Klebstoffs in der Pumpeneinheit 20 konstant bleibt. Dadurch wird der Klebstoff abhängig vom Verbrauch geschmolzen - Melt-on-Demand. Dank des geringen Klebstoffvolumens in der Pumpeneinheit 20, welches über längere Zeit auf einer hohen Temperatur gehalten werden muss, verbraucht die Apparatur 1 nur relativ wenig Energie, die bei Verarbeitung einer identischen Menge Klebstoff bei bekannten Apparaturen deutlich höher wäre.

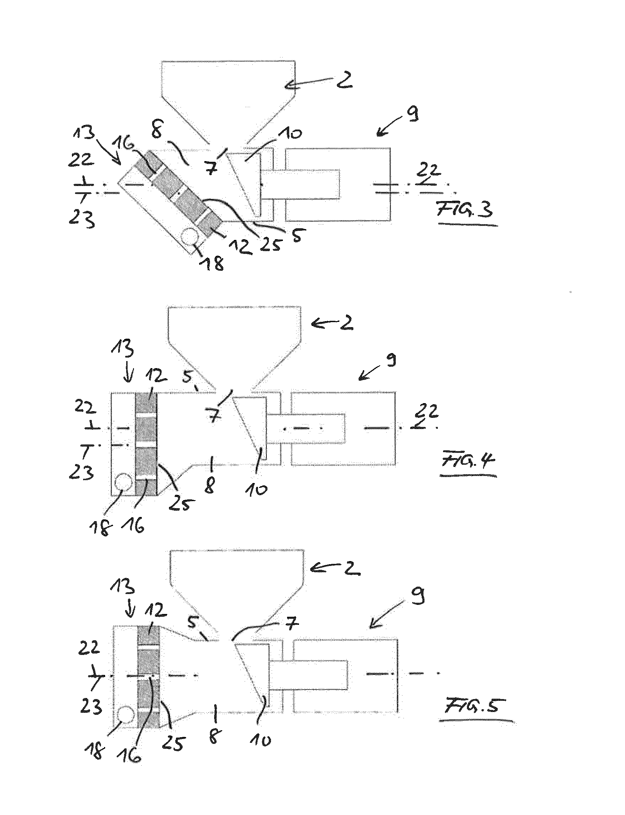

Das Ausführungsbeispiel gemäß Fig. 3 unterscheidet sich von demjenigen nach den Fig. 1 und 2 nur dadurch, dass die dem Verdichtungsraum 8 zugewandte Fläche der Schmelzeinrichtung 12 in der Knickebene zwischen Gehäuse 5 und Gehäusestutzen 13 angeordnet ist. Somit liegt die Mittelpunktlinie 3 der Schmelzeinrichtung 12 näher an der Vorschubachse 22 des Kolbens 10, bezogen auf die Vertikalerstreckung der Schmelzeinrichtung 12.

Bei den Ausführungsformen gemäß der Fig. 1 und 2 sowie Fig. 3 ist somit der Abstand des oberen Endes der Fläche 25 der Schmelzeinrichtung 12 zum oberen Endes des Kolbens 10 größer als der Abstand des unteren Endes der Fläche 25 zum unteren Ende des Kolbens 10.

Das Ausführungsbeispiel gemäß Fig. 4 unterscheidet sich von demjenigen gemäß den Fig. 1 und 2 dadurch, dass die Schmelzeinrichtung 12 bzw. der Grill vertikal angeordnet ist. Die Fläche 25 ist somit senkrecht zur Vorschubachse 22 des Kolbens 10 angeordnet. Der Abstand der Fläche 25 vom oberen Ende des Kolbens 10 ist geringer als der Abstand der Fläche 25 vom unteren Ende des Kolbens. Die Schmelzeinrichtung 12 ist, bezogen auf deren Vertikalerstreckung, asymmetrisch zur Vorschubachse 22 des Kolbens 10 nach unten versetzt, wie es durch die Mittelpunktlinie 23 verdeutlicht ist, die der halben vertikalen Erstreckung der Schmelzeinrichtung 12 zugeordnet ist. Bei diesem Ausführungsbeispiel erweitert sich der Verdichtungsraum 8 unten zum Gehäusestutzen 13 hin.

Das Ausführungsbeispiel nach Fig. 5 unterscheidet sich von demjenigen nach Fig. 4 dadurch, dass bei vertikaler Anordnung der Schmelzeinrichtung 12 dieser nach oben versetzt ist, sodass die Vorschubachse 22 des Kolbens 10 und die Mittelpunktlinie 23 der Schmelzeinrichtung 12 zusammenfallen. Da die Schmelzeinrichtung 12, bezogen auf deren Vertikalerstreckung, symmetrisch zur Vorschubachse 22 angeordnet ist, ist der Gehäusestutzen 13, vom Gehäuse 5 ausgehend, nach oben und unten konisch erweitert.

Die Form bzw. der Querschnitt der Schmelzeinrichtung 12 bzw. des Grills kann unterschiedlich gewählt sein. Insbesondere ist eine runde, ovale oder eckige Form, beispielsweise die Form eines Rechtecks, Sechsecks usw. vorgesehen.

Zum Betreiben der Apparatur 1 wird der Klebstoff bzw. das Granulat in den Vorratsbehälter 2 eingefüllt, wobei dieses Einfüllen wahlweise manuell oder automatisch erfolgen kann. Grundsätzlich ist es nicht erforderlich, einen Vorratsbehälter 2 vorzusehen, sondern es kann durch eine externe Zuführung, insbesondere eine Schlauchleitung das Granulat auch direkt der Einfüllöffnung 7 zugeführt werden. Der Kolben 10 wird beispielsweise durch einen Pneumatikzylinder horizontal zwischen den beiden Endpositionen des Zylinders 11 bewegt. Wenn der Kolben 10 ganz eingefahren ist, gibt er die Einfüllöffnung 7 zum Ausgabetrichter 3 frei und es rieselt das Granulat vertikal in den Verdichtungsraum 8. Danach fährt der Kolben 10 aus und - falls die Schmelzeinrichtung 12 bzw. der Grill genügend heißt ist - drückt den Klebstoff durch die Öffnungen 16 der Schmelzeinrichtung 12 und schmilzt ihn so auf. Falls die Schmelzeinrichtung 12 zu kalt ist, verdichtet der Kolben 10 den Klebstoff und bleibt stehen. Erreicht der Kolben 10 die vordere Position, betätigt er einen nicht veranschaulichten Endschalter und fährt zurück, womit der Zyklus erneut beginnt. Die Temperatur der Schmelzeinrichtung 12 wird geregelt durch die Höhe des Klebstoffniveaus in der Pumpeneinheit 20. Ist dieses Niveau unter einem Sollwert, heizt die Schmelzeinrichtung 12 auf. Geht das Niveau gegen den Sollwert, wird die Temperatur der Schmelzeinrichtung 12 reduziert. Ist das Niveau gleich dem Sollwert, wird die Schmelzeinrichtung 12 nicht beheizt.

### Bezugszeichenliste

- 1: Apparatur
- 2: Vorratsbehälter
- 3: Ausgabetrichter
- 4: Ausgabeöffnung
- 5: Gehäuse
- 6: Zylinder
- 7: Einfüllöffnung
- 8: Verdichtungsraum
- 9: Einrichtung
- 10: Kolben
- 11: Zylinder
- 12: Schmelzeinrichtung
- 13: Gehäusestutzen
- 14: Stirnwandung
- 15: Kolbenfläche
- 16: Öffnung
- 17: Behälter
- 18: Schmelzleitung
- 19: Pumpe
- 20: Pumpeneinheit
- 21: Niveausensor
- 22: Vorschubachse
- 23: Mittelpunktlinie
- 24: Kanal
- 25: Fläche

## Patentansprüche

1. Apparatur (1) zum Schmelzen von Klebstoff, insbesondere in Granulatform, mit einem eine Einfüllöffnung (7) aufweisenden Verdichtungsraum (8) zur Aufnahme von festem Klebstoff, einer Einrichtung (9) zum Verdichten des festen Klebstoffs, einer beheizbaren Schmelzeinrichtung (12) zum Schmelzen des Klebstoffs sowie einem beheizbaren Behälter (17) zur Aufnahme des geschmolzenen Klebstoffs, wobei der in den Verdichtungsraum (8) eingefüllte feste Klebstoff mittels der Einrichtung (9) durch Öffnungen (16) in der Schmelzeinrichtung (12) gepresst und in dieser geschmolzen wird, sowie der geschmolzene Klebstoff aus der Schmelzeinrichtung (12) ausgegeben und in den Behälter (17) abgeführt wird, **dadurch gekennzeichnet, dass** der Verdichtungsraum (8) oben die Einfüllöffnung (7) aufweist, die Kraftrichtung der Einrichtung (9) beim Verdichten horizontal ist und die Schmelzeinrichtung (12) außerhalb des Bereiches der Verdichtungsraums (8), der sich unterhalb der Einfüllöffnung (7) befindet, angeordnet ist.

2. Apparatur nach Anspruch 1, **dadurch gekennzeichnet, dass** die Schmelzeinrichtung (12) als Grill mit einer Vielzahl von Öffnungen (16) ausgebildet ist.

3. Apparatur nach Anspruch 1 oder 2, **dadurch gekennzeichnet, dass** die Schmelzeinrichtung (12), jeder Öffnung (16) zugeordnet, einen sich in Durchpressrichtung des Klebstoffs durch die Öffnungen (16) verjüngenden Querschnitt aufweist.

4. Apparatur nach einem der Ansprüche 1 bis 3, **dadurch gekennzeichnet, dass** die Schmelzeinrichtung (12) vertikal oder unter einem spitzen Winkel, vorzugsweise unter einem Winkel von 30° bis 60°, insbesondere unterem einem Winkel von 45° zur Vertikalen angeordnet ist.

5. Apparatur nach einem der Ansprüche 1 bis 4, **dadurch gekennzeichnet, dass** die die Schmelzeinrichtung (12) durchsetzenden Öffnungen (16) jeweils horizontal oder unter einem spitzen Winkel, vorzugsweise unter einem Winkel von 30° bis 60°, insbesondere unter einem Winkel von 45° zur Horizontalen angeordnet sind.

6. Apparatur nach einem der Ansprüche 1 bis 5, **dadurch gekennzeichnet, dass** im Verdichtungsraum (8) ein Kolben (10) der Einrichtung (9) zum Verdichten des festen Klebstoffs verschieblich ist.

7. Apparatur nach Anspruch 6, **dadurch gekennzeichnet, dass** der Kolben (10) beim Ausfahren die Einfüllöffnung (7) verschließt.

8. Apparatur nach einem der Ansprüche 1 bis 7, **dadurch gekennzeichnet, dass** eine dem Verdichtungsraum (8) zugewandte Kolbenfläche (15) unter einem Winkel von 10° bis 40°, insbesondere 20° bis 30° zur Vertikalen angeordnet ist, wobei ein oberes Ende der Kolbenfläche (15) in Ausfahrrichtung des Kolbens vorlaufend angeordnet ist.

9. Apparatur nach einem der Ansprüche 1 bis 8, **dadurch gekennzeichnet, dass** die Form der Kolbenfläche (15) und/oder die Form der Querschnittsfläche der Schmelzeinrichtung (12) rund, oval oder eckig ist.

10. Apparatur nach einem der Ansprüche 1 bis 9, **dadurch gekennzeichnet, dass** die Schmelzeinrichtung (12), bezogen auf deren Vertikalerstreckung, symmetrisch zu einer Vorschubachse (22) des Kolbens (10) oder asymmetrisch nach unten versetzt zu der Vorschubachse (22) angeordnet ist.

11. Apparatur nach einem der Ansprüche 1 bis 10, **dadurch gekennzeichnet, dass** oberhalb des Verdichtungsraums (8) ein Vorratsbehälter (2), insbesondere ein einen Ausgabetrichter (3) aufweisender Vorratsbehälter (2) angeordnet ist, wobei der Vorratsbehälter (2) eine Ausgabeöffnung (4) zum unmittelbaren Ausgeben von Klebstoff in Granulatform durch die Einfüllöffnung (7) in den Verdichtungsraum (8) aufweist.

12. Apparatur nach einem der Ansprüche 1 bis 11, **dadurch gekennzeichnet, dass** die Schmelzeinrichtung (12) thermisch vom Vorratsbehälter (2) und vom beheizbaren Behälter (17) zur Aufnahme des geschmolzenen Klebstoffs getrennt ist.

13. Apparatur nach einem der Ansprüche 1 bis 12, **dadurch gekennzeichnet, dass** der beheizbare Behälter (17) räumlich neben der Schmelzeinrichtung (12) angeordnet ist.

14. Apparatur nach einem der Ansprüche 1 bis 13, **dadurch gekennzeichnet, dass** die Schmelzeinrichtung (12), insbesondere der Grill, aus Aluminium besteht und/oder der Vorratsbehälter (2), insbesondere der Ausgabetrichter (3) aus Kunststoff, insbesondere aus Polytetrafluorethylen (PTFE) oder Polyoxymethylen (POM) besteht.

15. Apparatur nach einem der Ansprüche 1 bis 14, **dadurch gekennzeichnet, dass** die Schmelzeinrichtung (12) eine Leitung (18) zum Abführen des geschmolzenen Klebstoffs aufweist, wobei unterhalb der Leitung (18) der beheizbare Behälter (17) angeordnet ist, in dem der Klebstoff aufgefangen wird, wobei der Behälter (17) eine Pumpe (19) zum Ausgeben des heißen Klebstoffs zwecks dessen Auftrags zugeordnet ist.
